(19) Europäisches Patentamt
European Patent Office
Office européen des brevets

(11) Publication number: **0 210 818 B1**

(12) # EUROPEAN PATENT SPECIFICATION

(45) Date of publication of patent specification: **17.10.90**

(51) Int. Cl.$^5$: **A 01 N 43/40** // (A01N43/40, 39:04, 39:02, 37:40)

(21) Application number: **86305592.7**

(22) Date of filing: **21.07.86**

(54) **Herbicidal method comprising the use of diflufenican.**

(30) Priority: **23.07.85 GB 8518579**
**30.10.85 GB 8526734**

(43) Date of publication of application:
**04.02.87 Bulletin 87/06**

(45) Publication of the grant of the patent:
**17.10.90 Bulletin 90/42**

(84) Designated Contracting States:
**AT BE CH DE FR GB IT LI LU NL SE**

(56) References cited:
**EP-A-0 053 011**

(73) Proprietor: **MAY & BAKER LIMITED**
**Dagenham Essex RM10 7XS (GB)**

(72) Inventor: **Hewett, Richard Henry**
**May & Baker Limited Dagenham**
**Essex, RM10 7XS (GB)**
Inventor: **Veerasekaran, Ponnan**
**May & Baker Limited Dagenham**
**Essex, RM10 7XS (GB)**

(74) Representative: **Bentham, Stephen et al**
**J.A. Kemp & Co. 14 South Square Gray's Inn**
**London WC1R 5EU (GB)**

**EP 0 210 818 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to new herbicidal compositions comprising N-(2,4-difluorophenyl)-2-(3-trifluoromethylphenoxy)nicotinamide of the formula depicted in Figure I hereinafter, which is disclosed in the specification of British Patent Publication No. 2087887A as a pre- and/or post-emergence herbicide, and to their use in agriculture.

Bromoxynil [3,5-dibromo-4-hydroxybenzonitrile] and ioxynil [4-hydroxy-3,5-diiodobenzonitrile] and mixtures thereof are used on a large scale for post-emergence broad-leaf weed control in cereal crops. When used to control weeds at the "seedling" stage, to remove early competition, they are extremely effective, but owing to lack of residual activity in the soil they do not control the weeds which emerge after application. This can necessitate repeated application or delaying spraying until the majority of weeds have emerged by which time the oldest have exerted a considerable competitive effect on the crop. In addition certain broad-leaf weed species such as *Stellaria media, Galium aparine, Viola tricolor, Viola arvensis* and *Veronica hederifolia* are difficult to control with ioxynil and particularly with bromoxynil.

Bromoxynil and ioxynil and mixtures thereof also have no useful activity against annual grass weeds.

It is to be understood that where in this specification reference is made to a "HBN herbicide" it is intended to refer to bromoxynil [3,5-dibromo-4-hydroxybenzonitrile] or ioxynil [4-hydroxy-3,5-diiodobenzonitrile] in the form of the parent phenol (acid equivalent), an agriculturally acceptable salt or ester thereof, preferably a metal or amine salt or an ester thereof with an alkanoic acid containing from 2 to 10 carbon atoms, or to mixtures, preferably 3:1—1:3 wt/wt mixtures calculated in terms of acid equivalent weights, thereof where the context so permits.

As a result of research and experimentation it has been discovered that the use of the compound N-(2,4-difluorophenyl)-2-(3-trifluoromethylphenoxy)nicotinamide (hereinafter referred to for convenience as diflufenican) in combination with the HBN herbicide:—

a) adds residual soil activity, allowing early application and removal of weed competition without the necessity of repeated application,

b) widens the spectrum of weed control to include weeds such as *Stellaria media, Galium aparine* and *Viola arvensis*, and

c) gives control of annual grass weeds such as *Alopercurus myosuroides, Apera spica-venti, Poa annua, Poa trivialis, Echinochloa crus-galli*, and *Digitaria sanguinalis* when applied prior to their emergence in the crop.

Therefore the said combined use represents an important technological advance.

Surprisingly, in addition to this, it has been found that the combined herbicidal activity of diflufenican with the HBN herbicide against many weed species is much greater than expected when applied post-emergence (e.g. as a post-emergence spray), i.e. the herbicidal activity of diflufenican with the HBN herbicide showed an unexpected and remarkable degree of synergism on many weed species, for example on *Setaria viridis*, as defined by P. M. L. Tammes, Netherlands Journal of Plant Pathology, *70* (1964), pp. 73—80 in a paper entitled "Isoboles, a graphic representation of synergism in pesticides", and on *Veronica hederifolia, Anthemis cotula, Vicia sativa, Epilobium paniculatum, Lamium amplexicaule, Montia linearis* and *Sisymbrium altissimum* as defined by Limpel, L. E., P. H. Schuldt, and D. Lamont, 1962, Proc. NEWCC 16:48—53, using the formula:—

$$E=X+Y-\frac{XY}{100}$$

where

E=the expected percent inhibition of growth by a mixture of two herbicides at defined doses.

X=the percent inhibition of growth by herbicide A at a defined dose

Y=the percent inhibition of growth by herbicide B at a defined dose

(when the observed response is greater than expected the combination is synergistic).

The remarkable synergistic effect of the mixture applied post-emergence gives improved reliability of control of a large number of weed species occurring in cereal culture and permits a reduction in the amount of active ingredient employed.

Accordingly the present invention provides a method for the control of the growth of weeds at a cereal crop locus which comprises applying to the locus (a) bromoxynil, which is 3,5-dibromo-4-hydroxybenzonitrile, or ioxynil, which is 4-hydroxy-3,5-diiodobenzonitrile, an agriculturally acceptable salt or ester thereof, preferably a metal or amine salt or an ester thereof with an alkanoic acid containing from 2 to 10 carbon atoms, or a mixture, preferably a 3:1—1:3 wt/wt mixture calculated in terms of acid equivalent weights, thereof and (b) diflufenican, which is N-(2,4-difluorophenyl)-2-(3-trifluoromethylphenoxy)nicotinamide, the acid equivalent weight ratio of (a) to (b) being from 20:1 to 2:5, and preferably from 8:1 and 1:1, and in which (a) is applied to the locus at a rate of from 100 to 500 g acid equivalent (a.e.)/ha and (b) at a rate of from 25 to 250 g/ha. The method of the invention may be used to control a broad spectrum of weed species in cereal crops, e.g. wheat, barley, rice and maize, by pre- or post-emergence application, more especially early post-weed emergence post-crop emergence without

significant permanent damage to the crop. The combined use described above offers both foliar and residual activity.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have emerged above the surface of the soil. It will be appreciated that application according to the method may be from pre- to post-weed emergence pre-crop emergence to post-weed post-crop emergence. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled.

In the method according to the present invention, the use of one or more of the esters as hereinbefore defined of the HBN harbicide is preferred. Of the HBN herbicide esters, those with alkanoic acids containing from 4 to 8 carbon atoms, and more particularly the octanoates or heptanoates or mixtures thereof, are preferably used. The use of bromoxynil octanoate or heptanoate or a mixture thereof is especially preferred.

Weeds that may be controlled by the method include:— from broad-leaf weeds, *Aethusa cynapium, Abutilon theophrasti, Amaranthus retroflexus, Amsinckia intermedia, Anagallis arvensis, Anthemis arvensis, Anthemis cotula, Atriplex patula, Bidens pilosa, Brassica nigra, Capsella bursa-pastoris, Chenopodium album, Chrysanthemum segetum, Cirsium arvense, Datura stramonium, Desmodium tortuosum, Emex australis, Epilobium paniculatum, Euphorbia helioscopia, Fumaria officinalis, Galeopsis tetrahit, Galium aparine, Geranium dissectum, Ipomea purpurea, Lamium amplexicaule, Lamium purpureum, Lapsana communis, Matricaria inodora, Monochloria vaginalis, Montia linearis, Papaver rhoeas, Physalis longifolia, Plantago lanceolata, Polygonum* spp. (e.g. *Polygonum aviculare, Polygonum convolvulus* and *Polygonum persicaria), Portulaca oleracea, Raphanus raphanistrum, Rotala indica, Rumex obtusifolius, Saponaria vaccaria, Scandix pecten-veneris, Senecio vulgaris, Sesbania florida, Sida spinosa, Silene alba, Sinapis arvensis, Sisymbrium altissimum, Solanum nigrum, Sonchus arvensis, Spergula arvensis, Stellaria media, Thlaspi arvense, Tribulus terrestria, Urtica urens, Veronica hederifolia, Veronica persica, Vicia sativa, Viola arvensis* and *Xanthium strumarium*, and from grass weeds, *Alopercurus myosuroides, Apera spica-venti, Agrostis stolonifera, Poa annua, Poa trivalis, Digitaria sanguinalis, Echinochloa crus-galli, Eleusine indica, Setaria viridis* and, from sedges, *Cyperus iria* and *Eleocharis acicularis*.

The pattern of persistence of the HBN herbicide and the diflufenican allow the method of the present invention to be practised by the time-separated application of separate formulations.

In accordance with usual practice, a tank mix may be prepared prior to use by combining separate formulations of the individual herbicidal components.

The following Experiments illustrate the present invention:—

Experiment 1

The following greenhouse experiment demonstrates the synergistic activity of the combined use of bromoxynil and diflufenican in controlling the growth of *Setaria viridis*.

Greenhouse experiment showing nature of biological synergism between bromoxynil and diflufenican

A factorial experiment with 25 treatments was carried out to investigate the interaction of bromoxynil and diflufenican at a wide range of doses, i.e. bromoxynil triethylamine (Example 1 hereinafter) at 0, 125, 250, 500 and 1000 g a.e. (acid equivalent)/ha plus diflufenican (Example 2 hereinafter) at 0, 125, 250, 500 and 1000 g a.i./ha as indicated in the matrix below were applied at a spray volume rate of 260 l/ha to three replicate 9 cm diameter pots of John Innes No. 1 potting compost planted with 5 *Setaria viridis* seedlings at the 2 leaf stage. After spraying the pots were arranged in randomised blocks in a greenhouse watered as

necessary and assessed for percentage phytotoxicity (compared with unsprayed plants) after three weeks (0=no effect, 100=complete destruction).

bromoxynil triethylamine g a.e./ha

| | | | | | |
|---|---|---|---|---|---|
| Treatment (no.) | (1)<br>0 | (6)<br>125 | (11)<br>250 | (16)<br>500 | (21)<br>1000 |
| | (2)<br>125 | (7)<br>125<br>+<br>125 | (12)<br>250<br>+<br>125 | (17)<br>500<br>+<br>125 | (22)<br>1000<br>+<br>125 |
| diflufenican<br>g a.i./ha | (3)<br>250 | (8)<br>125<br>+<br>250 | (13)<br>250<br>+<br>250 | (18)<br>500<br>+<br>250 | (23)<br>1000<br>+<br>250 |
| | (4)<br>500 | (9)<br>125<br>+<br>500 | (14)<br>250<br>+<br>500 | (19)<br>500<br>+<br>500 | (24)<br>1000<br>+<br>500 |
| | (5)<br>1000 | (10)<br>125<br>+<br>1000 | (15)<br>250<br>+<br>1000 | (20)<br>500<br>+<br>1000 | (25)<br>1000<br>+<br>1000 |

The results were as follows:—

Bromoxynil triethylamine

| | | | | | | |
|---|---|---|---|---|---|---|
| | 0 | 0 | 0 | 0 | 0 | |
| | 30 | 40 | 45 | 50 | 70 | |
| Diflufenican | 38 | 40 | 50 | 60 | 80 | % phytotoxicity |
| | 45 | 60 | 60 | 80 | 90 | |
| | 60 | 70 | 80 | 100 | 100 | |

From these results the ED50 values (effective dose giving 50% phytotoxicity) in grams per hectare was calculated graphically for diflufenican alone and with increasing rates of bromoxynil triethylamine. Bromoxynil triethylamine had no activity on its own.

The ED50 values were as follows:—

| | ED50 g a.i./ha |
|---|---|
| Diflufenican (dif.) | 625 |
| dif.+bromoxynil 125 g/ha | 325 |
| dif.+bromoxynil 250 g/ha | 225 |
| dif.+bromoxynil 500 g/ha | 150 |
| dif.+bromoxynil 1000 g/ha | 75 |

The results were then used to plot an isobole with a "one sided effect" according to P. M. L. Tammes, Netherlands Journal of Plant Pathology *70*, 1964, pp. 73—80, *Isoboles, a graphic representation of synergism in pesticides*. The isobole produced was clearly a type II curve (Tammes, page 75 Figure 1) characteristic of synergism (Figure (i) hereinafter).

Experiment 2

A winter wheat crop at the 3—5 leaf stage contaminated with *Veronica hederifolia* at the 10—16 leaf

stage was sprayed with bromoxynil octanoate (formulation Example 4) at 0.25 lb a.e./acre (0.28 kg a.e./hectare), diflufenican (formulation Example 2) at 0.125 lb a.i./acre (0.14 kg a.i./hectare) and a tank mix of the two in 20 g.p.a (225 litre/ha). Treatments were applied to four replicate 8'×25' (2.4 m×7.6 m) randomised plots. 47 days after spraying percent injury to the crop and percent control of the weed was assessed. The mean result is given below.

| Treatment | | % Crop injury | % Control of *Veronica hederifolia* |
|---|---|---|---|
| Bromoxynil octanoate | 0.25 lb a.e./ac (0.28 kg a.e./ha) | 0 | 15 |
| Diflufenican | 0.125 lg a.i./ac (0.14 kg a.i./ha) | 0 | 60 |
| Brom. oct.+dif. | 0.25+0.125 lb/ac (0.28+0.14 kg/ha) | 0 | 94 |

Using Limpel formula:—

$$E=X+Y-\frac{XY}{100}$$

$$E=15+60-\frac{900}{100}=66$$

As the observed response on *Veronica hederifolia* was much higher than the expected the combination was clearly synergistic.

The crop tolerance was excellent.

Experiment 3

A winter wheat crop at the 2—3 leaf stage infested with *Anthemis cotula* (2—6 leaf), *Vicia sativa* (2—4 leaf) and *Epilobium paniculatum* (2—6 leaf) was treated in a similar manner to Experiment 2 and assessed for crop injury and weed control after 47 days. Results (mean of four replicates) were as follows:—

| | % Crop injury | % Control | | |
|---|---|---|---|---|
| | | *Anthemis* | *Vicia* | *Epilobium* |
| Bromoxynil octanoate 0.25 lb/ac (0.28 kg/ha) | 0 | 15 | 0 | 3 |
| Diflufenican 0.125 lb/ac (0.14 kg/ha) | 0 | 43 | 80 | 75 |
| Brom. oct.+dif. 0.25+0.125 lb/ac (0.28+0.14 kg/ha) | 0 | 98 | 99 | 100 |

Expected control for *Anthemis, Vicia* and *Epilobium* using the Limpel formula was 52, 80 and 76 respectively, clearly demonstrating that the combination was synergistic. The crop tolerance was excellent.

Experiment 4

A winter wheat crop at the 4—6 leaf stage infested with *Lamium amplexicaule* (4—10 leaf), *Montia linearis* (6—10 leaf) and *Sisymbrium altissimum* (4—8 leaf) was treated in a similar manner to Experiment 2

and assessed for crop injury and weed control 41 days after spraying. Results (mean of four replicates) were as follows:—

| | % Crop injury | % Control | | |
|---|---|---|---|---|
| | | *Lamium* | *Montia* | *Sisymbrium* |
| Bromoxynil octanoate 0.25 lb/ac (0.28 kg/ha) | 0 | 15 | 13 | 63 |
| Diflufenican 0.125 lb/ac (0.14 kg/ha) | 0 | 23 | 18 | 18 |
| Brom. oct.+dif. 0.25+0.125 lb/ac (0.28+0.14 kg/ha) | 0 | 94 | 97 | 99 |

Expected values for *Lamium, Montia* and *Sisymbrium* were 34, 29 and 70 respectively, thus the mixture was clearly synergistic. Crop tolerance was excellent.

Experiment 5

The efficacy of these synergistic mixtures for broad spectrum weed control in spring wheat and barley was demonstrated in small plot field trails where a combination of bromoxynil ester and diflufenican was compared with bromoxynil ester and with diflufenican alone. Diflufenican (Example 2 hereinafter) at 150 g a.i./ha, bromoxynil octanoate (commercial formulation) at 210 g a.e./ha and a tank mix of the two was applied in 102.9 litres/ha to 2 wheat and 1 barley crop at the 2—5 leaf stage. Treatments were applied to three replicate 17.5—25 $m^2$ plots using a motorised plot sprayer. Assessments of efficacy against weeds and safety to the crop were made visually two weeks after application using the following scale:

Rating scale
(ECW Western Canada) 1983

| Weed control | | Crop tolerance |
|---|---|---|
| 9 complete control | | 9 complete tolerance |
| 8 excellent control | commercially acceptable | 8 possible effect |
| 7 good control | | 7 slight effect |
| 6 fair control | | 6 definite effect |
| 5 poor control | | 5 severe effect |
| 4 moderate injury | | 4 severe effect |
| 3 definite effect | | 3 severe effect |
| 2 slight effect | | 2 severe effect |
| 1 possible effect | | 1 severe effect |
| 0 no effect | | 0 complete kill |

The results are shown in Table I below.

TABLE I
Mean weed control and crop safety
ECW Scales

| Treatment | *Setaria viridis* | *Thlaspi arvense* | *Chenopodium album* | *Fagopyrum tartaricum* | *Amaranthus retrofluxus* | Wheat | Barley |
|---|---|---|---|---|---|---|---|
| Diflufenican 150 g a.i./ha | 4.8 | 5 | 1 | 0 | 6 | 9 | 9 |
| Diflufenican 150 g a.i./ha + Bromoxynil octanoate 210 g a.e./ha | 8.8 | 9 | 9 | 9 | 9 | 9 | 9 |
| Bromoxynil octanoate 210 g a.e./ha | 2.1 | 7.8 | 9 | 8 | 7.3 | 9 | 9 |
| Occurrences (no.) | 2 | 1 | 2 | 1 | 1 | 2 | 1 |

Experiment 6

The efficacy of these mixtures for control of *Galium aparine, Veronica hederifolia* and *Viola tricolor* was demonstrated in the following field trials where a bromoxynil ester/diflufenican tank mix was compared with bromoxynil ester alone.

Bromoxynil octanoate (commercial product) at 250 g a.e./ha and a tank mix of bromoxynil octanoate plus 150 g a.i./ha of diflufenican (Example 2 hereinafter) was applied at a volume rate of 330—500 l/ha to replicate small plots (15—30 $m^2$) of 2 winter wheat and 2 winter barley crops using a knapsack sprayer. Weed control and crop safety are assessed as percentage phytotoxicity compared with untreated plots 20—30 days post spray.

The results are shown in Table II below.

TABLE II

Mean % phytotoxicity

| Treatment | *Galium aparine* | *Veronica hederifolia* | *Viola tricolor* | Winter Wheat | Winter Barley |
|---|---|---|---|---|---|
| Bromoxynil octanoate 250 g a.e./ha | 70 | 7 | 47 | 1 | 1 |
| Bromoxynil 250 g a.e./ha + diflufenican 150 g a.i./ha | 95 | 82 | 98 | 1 | 3 |
| Occurrences | 1 | 2 | 2 | 2 | 2 |

Experiment 7

The efficacy of these mixtures is demonstrated in the following field trials where a bromoxynil potassium salt (Example 3 hereinafter) plus diflufenican (Example 2 hereinafter) tank mix was compared with diflufenican alone.

One winter wheat and 3 winter barley sites were treated post-emergence with diflufenican at 125 g a.i./ha and a tank mix of diflufenican at 125 g a.i./ha plus bromoxynil K salt at 300 g a.e./ha applied in 220—235 litres of spray fluid per hectare using a motorised small plot sprayer. Three replicate plots 30 $m^2$ were sprayed with each treatment at each site.

Weed control was assessed in late spring following early spring and winter application by counting the number of weeds occurring in 2×0.5 $m^2$ quadrats per plot and expressing control as percentage reduction in weed numbers compared with unsprayed plots. Crop safety was assessed visually using a 0—100% phytotoxicity scoring system (0%=no effect, 100% complete destruction).

The results are shown in Table III below.

TABLE III

| Treatment | % Control of weed numbers | | | | | | | | | Crop phytotoxicity | |
|---|---|---|---|---|---|---|---|---|---|---|---|
| | *Poa annua* | *Stellaria media* | *Veronica persica* | *Viola arvensis* | *Cerastium arvensis* | *Capsella bursa-pastoris* | *Legousia hybrida* | *Matricaria inodora* | *Papaver rhoeas* | Winter Wheat | Winter Barley |
| Diflufenican 125 g a.i./ha | 69 | 90 | 95 | 90 | 100 | 100 | 99 | 44 | 66 | 0 | 0.83 |
| Diflufenican 125 g a.i./ha + Bromoxynil K salt 300 g a.e./ha | 86 | 96 | 99 | 98 | 100 | 100 | 100 | 95 | 98 | 0 | 1.38 |
| Occurrences | 2 | 3 | 3 | 2 | 1 | 1 | 1 | 1 | 2 | 1 | 3 |

These trials demonstrate clearly the wide spectrum of control including *Setaria viridis, Galium aparine, Veronica* and *Viola* which can be obtained with the synergistic mixtures.

According to a further feature of the present invention, there are provided herbicidal compositions comprising (a) 3,5-dibromo-4-hydroxy-benzonitrile or 4-hydroxy-3,5-diiodobenzonitrile, an agriculturally acceptable salt or ester thereof, preferably a metal or amine salt or an ester thereof with an alkanoic acid containing from 2 to 10 carbon atoms, or a mixture, preferably a 3:1—1:3 wt/wt mixture calculated in terms of acid equivalent weights, thereof and (b) diflufenican, the weight ratio of (a) to (b) being from 20:1 to 2:5 wt/wt of (a) to (b) [preferably 8:1 to 1:1 wt/wt of (a) to (b)] in association with, and preferably homogeneously dispersed in, one or more compatible herbicidally-acceptable diluents or carriers and/or surface-active agents (i.e. diluents or carriers or surface-active agents of the type generally accepted in the art as being suitable for use in herbicidal compositions and which are compatible with the HBN herbicide and diflufenican). The term "homogeneously dispersed" is used to include compositions in which the HBN herbicide and diflufenican are dissolved in the other components. The term "herbicidal compositions" is used in a broad sense to include not only compositions which are ready for use as herbicides but also concentrates which must be diluted before use. Preferably, the compositions contain from 0.05 to 90% by weight of the HBN herbicide and diflufenican.

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding the HBN herbicide and diflufenican with solid diluents or by impregnating the solid diluents or carriers with solutions of the HBN herbicide and diflufenican in volatile solvents, evaporating the solvents and, if necessary, grinding the products so as to obtain powders. Granular formulations may be prepared by absorbing the HBN herbicide and diflufenican (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, N-methyl-pyrrolidone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of the HBN herbicide and diflufenican may be used in the form of self-emulsifying concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of the HBN herbicide and diflufenican, from 2 to 10% w/v of surface-active agent, from 0.1 to 5% w/v of thickener and from 15 to 87.9% by volume of water; wettable powders which comprise from 10 to 90% w/w of the HBN herbicide and diflufenican, from 2 to 10% w/w of surface-active agent and from 10 to 88% w/w of solid diluent or carrier; liquid water soluble concentrates which comprise from 10 to 30% w/v of the HBN herbicide and diflufenican, from 5 to 25% w/v of surface-active agent and from 45 to 85% by volume of water-miscible solvent, e.g. dimethylformamide or N-methyl-pyrrolidone; liquid emulsifiable suspension concentrates which comprise 10 to 70% w/v of the HBN herbicide and diflufenican, from 5 to 15% w/v of surface-active agent, from 0.1 to 5% w/v of thickener and from 10 to 84.9% by volume of organic solvent; granules which comprise from 2 to 10% w/w of the HBN

herbicide and diflufenican, from 0.5 to 2% w/w of surface-active agent and from 88 to 97.5% w/w of granular carrier and emulsifiable concentrates which comprise from 0.05 to 90% w/v, and preferably from 1 to 60% w/v, of the HBN herbicide and diflufenican, from 0.01 to 10% w/v, and preferably from 1 to 10% w/v, of surface-active agent and from 9.99 to 99.94%, and preferably from 39 to 98.99%, by volume of organic solvent.

Herbicidal compositions according to the present invention may also comprise the HBN herbicide and diflufenican in association with, and preferably homogeneously dispersed in, one or more other pesticidally active compounds and, if desired, one or more compatible pesticidally acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example alachlor [α-chloro-2,6-diethyl-N-(methoxymethyl)acetanilide], asulam [methyl (4-aminobenzenesulphonyl)carbamate], alloxydim Na (sodium salt of 2-(1-allyloxyaminobutylidine)-5,5-dimethyl-4-methoxycarbonylcyclohexane-1,3-dione], atrazine (2-chloro-4-ethylamino-6-isopropylamino-1,3,5-triazine], barban [4-chlorobut-2-ynyl N-(3-chlorophenyl)carbamate], benzoylprop-ethyl [ethyl N-benzoyl-N-(3,4-dichlorophenyl-2-aminopropionate], butachlor [N-(butoxymethyl)-α-chloro-2,6-diethylacetanilide], butylate [S-ethyl N,N-diisobutyl(thiocarbamate)], carbetamide [D-N-ethyl-2-(phenylcarbamoyloxy)propionamide], chlorfenpropmethyl [methyl 2-chloro-2-(4-chlorophenyl)propionate], chlorpropham [isopropyl N-(3-chlorophenyl)carbamate], chlortoluron [N'-(chloro-4-methylphenyl)-N,N-dimethylurea], cyanazine [2-chloro-4-(1-cyano-1-methylethylamino)-6-ethylamino-1,3,5-triazine], cycloate [N'-cyclohexyl-N-ethyl-S-ethyl(thiocarbamate)], 2,4-D[2,4-dichlorophenoxyacetic acid], dalapon [2,2-dichloropropionic acid], 2,4-DB [4-(2,4-dichlorophenoxy)butyric acid], desmedipham [3-(ethoxycarbonylamino)phenyl N-phenylcarbamate], diallate [S-2,3-dichloroallyl-N,N-diisopropyl(thiocarbamate)], dicamba [3,6-dichloro-2-methoxybenzoic acid], dichlorprop [(±)-2-(2,4-dichlorophenoxy)propionic acid], diclofop [(RS)-2-[4-(2,4-dichlorophenoxy)phenoxy]propionic acid], difenzoquat [1,2-dimethyl-3,5-diphenyl-pyrazolium salts], dimefuron [4-[2-chloro-4-(3,3-dimethylureido)phenyl]-2-t-butyl-1,3,4-oxadiazolin-5-one], dinitramine [$N^1$,$N^1$-diethyl-2,6-dinitro-4-trifluoromethyl-*m*-phenylenediamine], diuron [N'-(3,4-dichlorophenyl)-N,N-dimethylurea], EPTC [S-ethyl N,N-dipropyl(thiocarbamate)], ethofumesate [2-ethoxy-2,3-dihydro-3,3-dimethylbenzofuran-5-yl methylsulphonate], flamprop-isopropyl [isopropyl (±)-2-(N-benzoyl-3-chloro-4-fluoroanilino)propionate], flamprop-methyl [methyl (±)-2-(N-benzoyl-3-chloro-4-fluoroanilino)-propionate], fluometuron [N'-(3-trifluoromethylphenyl)-N,N-dimethylurea], isoproturon [N'-(4-isopropylphenyl)-N,N-dimethylurea], linuron [N'-(3,4-dichlorophenyl)-N-methoxy-N-methylurea], MCPA [4-chloro-2-methyl- phenoxyacetic acid], MCPB [4-(4-chloro-2-methylphenoxy)butyric acid], mecoprop [(±)-2-(4-chloro-2-methyl-phenoxy)propionic acid], metamitron [4-amino-3-methyl-6-phenyl-1,2,4-triazin-5(4H)-one], methabenzthiazuron [N-(benzothiazol-2-yl)-N,N'-dimethylurea], metribuzin [4-amino-6-t-butyl-3-(methylthio)-1,2,4-triazin-5(4H)-one], molinate [S-ethyl N,N-hexamethylene(thiocarbamate)], oxadiazon [3-(2,4-dichloro-5-isopropoxyphenyl)-5-t-butyl-1,3,4- oxadiazolin-2-one], paraquat [1,1'-dimethyl-4,4'-bipyridylium salts], pebulate [S-propyl N-butyl-N-ethyl(thiocarbamate)], phenmedipham [3-(methoxycarbonylamino)phenyl N-(3-methylphenyl)carbamate], prometryne [4,6-bisisopropylamino-2-methylthio-1,3,5-triazine], propachlor [α-chloro-N-isopropyl-acetanilide], propanil [N-(3,4-dichlorophenyl)-propionamide], propham [isopropyl N-phenylcarbamate], pyrazone [5-amino-4-chloro-2-phenylpyridazin-3(2H)-one], simazine [2-chloro-4,6-bisethylamino-1,3,5-triazine], TCA (trichloroacetic acid), thiobencarb [S-(4-chlorobenzyl)-N,N-diethylthiolcarbamate], triallate [S-2,3,3-trichloroallyl N,N-di-isopropyl-(thiocarbamate)], and trifluralin [2,6-dinitro-N,N-dipropyl-4-trifluoromethylaniline]; insecticides, e.g. carbaryl [naphth-1-yl N-methylcarbamate]; synthetic pyrethroids, e.g. permethrin and cypermethrin; and fungicides, e.g. 2,6-dimethyl-4-tridecyl-morpholine, methyl N-(1-butylcarbamoylbenzimidazol-2-yl)carbamate, 1,2-bis-(3-methoxycarbonyl-2-thioureido)benzene, isopropyl 1-carbamoyl-3-(3,5-dichlorophenyl)hydantoin and 1-(4-chlorophenoxy)-3,3-dimethyl-1-(1,2,4-triazol-1-yl)-butan-2-one. Other biologically active materials which may be included in, or used in conjunction with, the herbicidal compositions of the present invention are plant growth regulators, e.g. succinamic acid, (2-chloroethyl)trimethylammonium chloride and 2-chloroethane-phosphonic acid; or fertilizers, e.g. containing nitrogen, potassium and phosphorus and trace elements known to be essential to successful plant life, e.g. iron, magnesium, zinc, manganese, cobalt and copper.

Pesticidally active compounds and other biologically active materials which may be included in, or used in conjunction with, the herbicidal compositions of the present invention, for example those hereinbefore mentioned, and which are acids, may, if desired, be utilized in the form of conventional derivatives, for example alkali metal and amine salts and esters.

Preferred herbicidal compositions according to the present invention which comprise the HBN herbicide and diflufenican in association with another herbicide are those wherein the other herbicide is diclofop, MCPA or mecoprop or an agriculturally acceptable salt or ester thereof.

According to a further feature of the present invention there is provided a method according to the present invention as hereinbefore described in which in addition diclofop, MCPA or mecoprop or an agriculturally acceptable salt or ester thereof is applied preferably at an application rate of between 500 and 1500 g a.e./ha, between 100 and 1500 g a.e./ha and between 1000 and 2500 g a.e./ha respectively

(preferably between 570—1140 g a.e./ha, between 150 and 1000 g a.e./ha and between 1000 and 2000 g a.e./ha respectively) for weed control in cereals, preferably small grain cereals, e.g. wheat and barley.

The compositions of the invention may be made up as an article of manufacture comprising the HBN herbicide and diflufenican and optionally other pesticidally active compounds as hereinbefore described or, as is preferred, a herbicidal composition as hereinbefore described, and preferably a herbicidal concentrate which must be diluted before use, comprising the HBN herbicide and diflufenican within a container for the aforesaid HBN herbicide and diflufenican or a said herbicidal composition, and instructions physically associated with the aforesaid container setting out the manner in which the aforesaid HBN herbicide and diflufenican or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-lacquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least one acre of ground to control the growth of weeds therein but will not exceed a size which is convenient for conventional methods of handling. The instructions will be physically associated with the container, for example by being printed directly thereon or on a label or tag affixed thereto. The directions will normally indicate that the contents of the container, after dilution if necessary, are to be applied to control the growth of weeds at rates of application between 100 g and 500 g a.e. of the HBN herbicide and between 25 g and 250 g of diflufenican per hectare in the manner and for the purposes hereinbefore described.

According to a further feature of the present invention, there is provided a product comprising (1) 3,5-dibromo-4-hydroxybenzonitrile or 4-hydroxy-3,5-diiodobenzonitrile, an agriculturally acceptable salt or ester thereof, preferably a metal or amine salt or an ester thereof with an alkanoic acid containing from 2 to 10 carbon atoms, or a mixture, preferably a 3:1—1:3 wt/wt mixture calculated in terms of acid equivalent weights, thereof and (b) diflufenican, the weight ratio of (a) to (b) being, from 20:1 to 2:5, as a combined preparation for simultaneous, separate or sequential use in controlling the growth of weeds at a cereal crop locus.

The following Examples illustrate herbicidal compositions according to the present invention and herbicidal compositions suitable for use in the method for controlling the growth of weeds according to the present invention.

Example 1

A water-miscible composition containing bromoxynil triethylamine salt was prepared from:—

| | |
|---|---|
| bromoxynil | 34% w/v |
| triethylamine | 15% w/v |
| Soprophor BSU (tristyryl phenol/-ethylene oxide condensate containing 18 moles of ethylene oxide | 1.5% w/v |
| diethylene glycol | 25% w/v |
| water | to 100% by volume |

by mixing together a portion of the water, the diethylene glycol, the bromoxynil and the triethylamine (15% w/v of triethylamine represents a 2.6% by weight excess of triethylamine over the stoichiometric amount required to form bromoxynil triethylamine salt) with heating and stirring. The tristyryl phenol/ethylene oxide condensate was then added and the volume was made up to 100% by the addition of water.

Example 2

An aqueous suspension concentrate was formed from:—

| | |
|---|---|
| Diflufenican | 50% w/v |
| Ethylan BCP (a nonylphenol-ethylene oxide condensate containing 9 moles of ethylene oxide per mole of phenol) | 0.5% w/v |
| Soprophor FL (triethanolamine salt of oxyethylated polyarylphenolphosphate) | 1.0% w/v |
| Sopropon T36 (sodium polycarboxylate) | 0.5% w/v |
| Antifoam FD (silicone antifoam) | 0.1% w/v |
| Rhodigel 23 (xanthan gum) | 0.2% w/v |
| Dichlorophen sodium solution, 40% w/w | 0.25% w/v |
| Water | to 100% by volume |

Example 3

A water-miscible composition containing bromoxynil potassium salt was prepared from:—

| | |
|---|---|
| bromoxynil | 25% w/v |
| potassium hydroxide | 5.1% w/v |
| tetrahydrofurfuryl alcohol | 25% w/v |
| water | to 100% by volume |

by mixing together a portion of the water, the tetrahydrofurfuryl alcohol, the bromoxynil and the potassium hydroxide with heating and stirring and then the volume was made up to 100% by the addition of water.

Example 4

An emulsifiable composition containing bromoxynil octanoate was prepared from:—

| | |
|---|---|
| bromoxynil octanoate containing 63.9% w/w phenol acid equivalent | 35.2% w/v |
| Atlox 4855 (a mixture of anionic and nonionic surfactants) | 3.75% w/v |
| Agrilan A (a mixture of anionic and nonionic surfactants) | 3.75% w/v |
| Solvesso 150 (aromatic C10 petroleum fraction) | to 100% by volume |

by mixing together a portion of the aromatic C10 petroleum fraction, the Atlox 4855, the Agrilan A and the bromoxynil octanoate with heating and stirring and then the volume was made up to 100% by the addition of aromatic C10 petroleum fraction.

Example 5

An aqueous suspension concentrate containing bromoxynil phenol was prepared from:—

| | |
|---|---|
| bromoxynil | 56.25% w/v |
| Soprophor FL (phosphate ester of aryl phenol ethoxylate | 3.5% w/v |
| Sopropon T36 (sodium salt of polycarboxylic acid) | 0.3% w/v |
| Ethylan BCP (nonyl phenol/ethylene oxide condensate containing 9 moles of ethylene oxide) | 0.5% w/v |
| Antifoam FD (silicone antifoam) | 0.1% w/v |
| Attagel 50 (swellable attapulgite clay) | 2.0% w/v |
| propylene glycol | 5.0% w/v |
| water | to 100% by volume |

by intimately mixing the ingredients and grinding by pumping under pressure through a bead-charged mill.

Example 6

An aqueous suspension concentrate containing bromoxynil octanoate and diflufenican (5.87:1) was prepared from:—

| | |
|---|---|
| bromoxynil octanoate containing 63.9% w/w phenol acid equivalent | 35.2% w/v |
| Arylan CA (calcium dodecyl benzene sulphonate 70% solution in butanol) | 2.0% w/v |
| Synperonic NPE 1800 (nonyl phenol ethylene oxide/propylene oxide block copolymer) | 3.0% w/v |
| Solvesso 200 (aromatic C10/C13 petroleum fraction) | 6.0% w/v |
| diflufenican | 6.0% w/v |
| Soprophor 3D33 (ethoxylated polyaryl phenol phosphate neutralised with triethanolamine) | 0.16% w/v |
| Olin 10G (nonyl phenol/glycidol condensate containing 10 moles of glycidol) | 0.08% w/v |
| Antifoam FD (silicone antifoam) | 0.2% w/v |
| Attagel 50 (swellable attapulgite clay) | 2.0% w/v |
| ammonium chloride | 5.0% w/v |
| water | to 100% by volume |

by mixing together the calcium dodecyl benzene sulphonate solution, the nonyl phenol ethylene oxide/ propylene oxide block copolymer, the aromatic C10/C13 petroleum fraction and the bromoxynil octanoate with heating and stirring. An aqueous suspension concentrate was then prepared by intimately mixing 40% by volume of water with the diflufenican, the ethoxylated polyaryl phenol phosphate neutralised with triethanolamine, the nonyl phenol/glycidol condensate, the silicone antifoam, the attapulgite clay and the ammonium chloride and then grinding by pumping under pressure through a bead-charged mill. The previously prepared bromoxynil octanoate solution was then added to this suspension concentrate with stirring and the volume was made up to 100% by the addition of water.

1.5 litres of the resulting formulation was diluted in 200 litres of water and sprayed post-emergence to control *Stellaria media, Viola arvensis* and *Veronica persica* in one hectare of winter wheat.

Example 7

A 10:1 mixture was formed by tank mixing 888 ml of the composition of Example 5 with 100 ml of the composition of Example 2 in a volume of 100 litres of water. The resulting spray fluid was applied to one hectare of emerged barley to control *Polygonum convolvulus, Sinapis arvensis* and *Amaranthus retroflexus.*

Example 8

A 20:1 mixture was formed by tank mixing 888 ml of the composition of Example 5 with 50 ml of the composition of Example 2 in a volume of 100 litres of water. The resulting spray fluid was applied to one hectare of emerged barley to control *Polygonum convolvulus, Sinapis arvensis* and *Amaranthus retroflexus.*

Example 9

A 2:5 mixture was formed by tank mixing 444 ml of formulation of Example 4 with 500 ml of formulation of Example 2 in 300 litres of water. The resulting spray fluid was applied to one hectare of spring wheat soon after emergence to control emerged and germinating *Setaria viridis* and *Amaranthus retroflexus.*

Example 10

A tank mix consisting of 600 ml of formulation of Example 6 and 1800 ml of a stable aqueous solution containing potassium, sodium and dimethylamine salts of MCPA equivalent to 500 g/l of 2-methyl-4-chlorophenoxyacetic acid was made in 200 litres of water. This was applied post-emergence to one hectare of winter wheat to control *Stellaria media, Galeopsis tetrahit, Sinapis arvensis* and *Viola arvensis.*

In the mixed formulations in the Examples hereinbefore, the HBN herbicide may be replaced by one other or a mixture of the HBN herbicides.

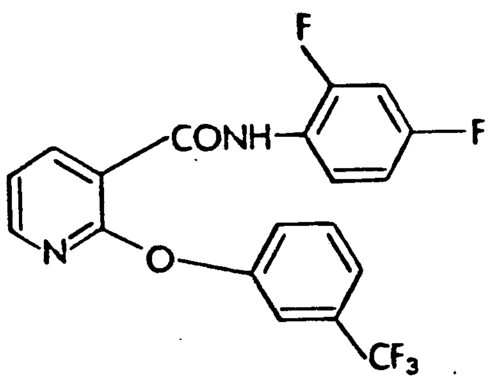

I

**Claims**

1. A method of controlling the growth of weeds at a cereal crop locus which comprises applying to the locus (a) bromoxynil, which is 3,5-dibromo-4-hydroxybenzonitrile, or ioxynil, which is 4-hydroxy-3,5-diiodobenzonitrile, an agriculturally acceptable salt or ester thereof or a mixture thereof and (b) diflufenican which is N-(2,4-difluorophenyl)-2-(3-trifluoromethylphenoxy)-nicotinamide, the acid equivalent weight ratio of (a) to (b) being from 20:1 to 2:5 and in which (a) is applied to the locus at a rate of from 100 to 500 g acid equivalent/ha and (b) at a rate of from 25 to 250 g/ha.

2. A method according to claim 1 in which (a) comprises the ester of bromoxynil or ioxynil with an alkanoic acid of from 4 to 8 carbon atoms.

3. A method according to claim 2 in which (a) comprises bromoxynil octanoate or bromoxynil heptanoate.

4. A method according to any one of claims 1 to 3 which further comprises applying (RS)-2-[4-(2,4-dichlorophenoxy)phenoxy]propionic acid, 4-chloro-2-methylphenoxyacetic acid or (−)-2-(4-chloro-2-methylphenoxy) propionic acid (hereinafter referred to as diclofop, MCPA and mecoprop respectively) or an agriculturally acceptable salt or ester thereof.

5. A method according to claim 4 in which diclofop, MCPA or mecoprop or an agriculturally acceptable salt or ester thereof is applied at a rate of from 500 to 1500 g acid equivalent/ha, from 100 to 1500 g acid equivalent/ha or from 1000 to 2500 g acid equivalent/ha respectively.

6. A product comprising (a) bromoxynil, which is 3,5-dibromo-4-hydroxybenzonitrile, or ioxynil, which is 4-hydroxy-3,5-diiodobenzonitrile, or an agriculturally acceptable ester or salt thereof, or a mixture thereof, and (b) diflufenican, which is N-(2,4-difluorophenyl)-2-(3-trifluoromethylphenoxy)-nicotinamide, the weight ratio of (a) to (b) being from 20:1 to 2:5, as a combined preparation for simultaneous, separate or sequential use in controlling the growth of weeds at a cereal crop locus.

7. A herbicidal composition which comprises (a) bromoxynil or ioxynil or an agriculturally acceptable salt or ester thereof, or a mixture thereof, and (b) diflufenican, the weight ratio of (a) to (b) being from 20:1 to 2:5, in association with a herbicidally acceptable diluent or carrier and/or surface active agent.

8. A herbicidal composition according to claim 7 in which (a) comprises the ester of bromoxynil or ioxynil with an alkanoic acid of from 4 to 8 carbon atoms.

9. A herbicidal composition according to claim 8 in which (a) comprises bromoxynil octanoate or bromoxynil heptanoate.

10. A herbicidal composition according to any one of claims 7 to 9 which further comprises (RS)-2-[4-(2,4-dichlorophenoxy)phenoxy]propionic acid, 4-chloro-2-methylphenoxyacetic acid or (−)-2-(4-chloro-2-methylphenoxy)propionic acid, or an agriculturally acceptable salt or ester thereof.

**Patentansprüche**

1. Verfahren zur Bekämpfung des Unkrautwachstums auf Getreidefeldern durch Applikation von

(a) Bromoxynil (3,5-Dibrom-4-hydroxybenzonitril) oder Ioxynil (4-Hydroxy-3,5-dijodbenzonitril), eines landwirtschaftlich akzeptablen Salzes oder Esters derselben oder eines Gemischs derselben und

(b) Diflufenican (N-(2,4-Difluorphenyl))-2-(3-trifluormethylphenoxy)-nicotinamid) auf das (jeweilige) Feld,

wobei das Säureäquivalentgewichtsverhältnis (a)/(b) 20:1 bis 2:5 beträgt und (a) auf das Feld in einer Menge von 100—500 g Säureäquivalent/ha und (b) in einer Menge von 25—250 g/ha appliziert werden.

2. Verfahren nach Anspruch 1, bei welchem (a) aus dem Ester von Bromoxynil oder Ioxynil mit einer Alkansäure von 4—8 Kohlenstoffatomen besteht.

3. Verfahren nach Anspruch 2, bei welchem (a) aus Bromoxyniloctanoat oder Bromoxynilheptanoat besteht.

4. Verfahren nach einem der Ansprüche 1 bis 3, bei welchem zusätzlich (RS)-2-[4-(2,4-Dichlorphenoxy)-phenoxy]-propionsäure, 4-Chlor-2-methylphenoxyessigsäure oder (−)-2-(4-Chlor-2-methylphenoxy)-propionsäure (als "Diclofop", "MCPA" bzw. "Mecoprop" bezeichnet) oder ein landwirtschaftlich akzeptables Salz oder ein landwirtschaftlich akzeptabler Ester derselben appliziert wird.

5. Verfahren nach Anspruch 4, bei welchem Diclofop, MCPA oder Mecoprop oder ein landwirtschaftlich akzeptables Salz oder ein landwirtschaftlich akzeptabler Ester derselben in einer Menge von 500—1500 g Säureäquivalent/ha, 100—1500 g Säureäquivalent/ha bzw. 1000—2500 g Säureäquivalent/ha appliziert werden.

6. Produkt, umfassend

(a) Bromoxynil (3,4-Dibrom-4-hydroxybenzonitril) oder Ioxynil (4-Hydroxy-3,5-dijodbenzontril) oder einen landwirtschaftlich akzeptablen Ester oder ein landwirtschaftlich akzeptables Salz derselben oder eine Mischung derselben und

(b) Diflufenican (N-(2,4-Difluorphenyl)-2-(3-trifluormethylphenoxy)-nicotinamid),

wobei das Gewichtsverhältnis (a)/(b) von 20:1 bis 2:5 reicht, als Kombinationspräparat zum gleichzeitigen, getrennten oder aufeinanderfolgenden Gebrauch bei der Bekämpfung des Unkrautwachstums auf Getreidefeldern.

7. Herbizides Mittel, umfassend

(a) Bromoxynil oder Ioxynil oder ein landwirtschaftlich akzeptables Salz oder einen landwirtschaftlich akzeptablen Ester derselben oder eine Mischung derselben und

(b) Diflufenican,

wobei das Gewichtsverhältnis (a)/(b) von 20:1 bis 2:5 reicht, in Verbindung mit einem auf dem Herbizidgebiet akzeptablen Verdünnungsmittel oder Träger und/oder Netzmittel.

8. Herbizides Mittel nach Anspruch 7, bei welchem (a) aus dem Ester von Bromoxynil oder Ioxynil mit einer Alkansäure von 4—8 Kohlenstoffatomen besteht.

9. Herbizides Mittel nach Anspruch 8, bei dem (a) aus Bromoxyniloctanoat oder Bromoxynilheptanoat besteht.

10. Herbizides Mittel nach einem der Ansprüche 7 bis 9, das zusätzlich (RS)-2-[4-(2,4-Dichlorphenoxy)-phenoxy]-propionsäure, 4-Chlor-2-methylphenoxyessigsäure oder ein landwirtschaftlich akzeptables Salz oder einen landwirtschaftlich akzeptablen Ester derselben enthält.

**Revendications**

1. Une méthode de contrôle de la croissance des mauvaises herbes dans une zone de culture des céréales qui comprend l'application à ladite zone (a) du bromoxynil, qui est le 3,5-dibromo-4-hydroxybenzonitrile, ou de l'ioxynil, qui est le 4-hydroxy-3,5-diiodobenzonitrile, ou d'un sel ou d'un ester dudit composé acceptable en agriculture ou d'un mélange de ceux-ci et (b) du diflufénican qui est le N-(2,4-difluorophényl)-2-(3-trifluorométhylphénoxy)-nicotinamide, le rapport en poids en équivalent acide de (a) à (b) étant de 20:1 à 2:5 et (a) est appliqué à ladite zone à un taux de 100 à 500 g d'équivalent acide/ha et (b) est appliqué à un taux de 25 à 250 g/ha.

2. Une méthode selon la revendication 1, selon laquelle (a) comprend l'ester du bromoxynil ou de l'ioxynil avec un acide alcanoïque de 4 à 8 atomes de carbone.

3. Une méthode selon la revendication 2, selon laquelle (a) comprend l'octanoate de bromoxynil ou l'heptanoate de bromoxynil.

4. Une méthode selon l'une quelconque des revendications 1 à 3, qui comprend en outre l'application de l'acide (RS)-2-[(2,4-dichlorophénoxy)phénoxy]propionique, de l'acide 4-chloro-2-méthyl-phénoxyacétique ou de l'acide (−)-2-(4-chloro-2-méthylphénoxy)propionique (désigné ci-après par diclofop, MCPA et mecoprop respectivement) ou d'un sel ou d'un ester dudit acide acceptable en agriculture.

5. Une méthode selon la revendication 4, selon laquelle le diclofop, le MCPA ou le mecoprop ou un sel ou un ester de ce dernier acceptable en agrilcuture est appliqué à un taux de 500 à 1500 g d'éequivalents acides/ha, de 100 à 1500 g d'euivalent acide/ha ou de 1000 à 2500 g d'équivalent acide/ha respectivement.

6. Un produit comprenant (a) du bromoxynil, qui est le 3,5-dibromo-4-hydroxybenzonitrile, ou de l'ioxynil, qui est le 4-hydroxy-3,5-diiodobenzonitrile, ou d'un ester ou d'un sel de ce dernier acceptable en agriculture, ou d'un mélange de ceux-ci, et (b) du diflufénican qui est le N-(2,4-difluorophényl)-2-(3-trifluorométhylphénoxy)-nicotinamide, le rapport en poids de (a) à (b) étant de 20:1 à 2:5, sous la forme d'une préparation combinée pour l'utilisation simultanée, séparée ou séquentielle dans le contrôle de la croissance des mauvaises herbes dans une zone de culture des céréales.

7. Une composition herbicide qui comprend (a) du bromoxynil ou de l'ioxynil ou d'un sel ou d'un ester de ce dernier acceptable en agriculture, ou d'un mélange de ceux-ci, et (b) du difluflénican, le rapport en poids de (a) à (b) étant de 20:1 à 2:5, en association avec un diluant ou un support acceptable pour les herbicides et/ou un agent tensioactif.

8. Une composition herbicide selon la revendication 7, selon laquelle (a) comprend l'ester de bromoxynil ou d'ioxynil avec un acide alcanoïque de 4 à 8 atomes de carbone.

9. Une composition herbicide selon la revendication 8, selon laquelle (a) comprend l'octanoate de bromoxynil ou l'heptanoate de bromoxynil.

10. Une composition herbicide selon l'une quelconque des revendications 7 à 9 qui comprend en outre l'acide (RS)-2-[4-(2,4-dichlorophénoxy)phénoxy]propionique, l'acide 4-chloro-2-méthylphénoxyacétique ou l'acide (−)-2-(4-chloro-2-méthylphénoxy)-propionique, ou un sel ou un ester dudit acide acceptable en agriculture.

Figure (i)

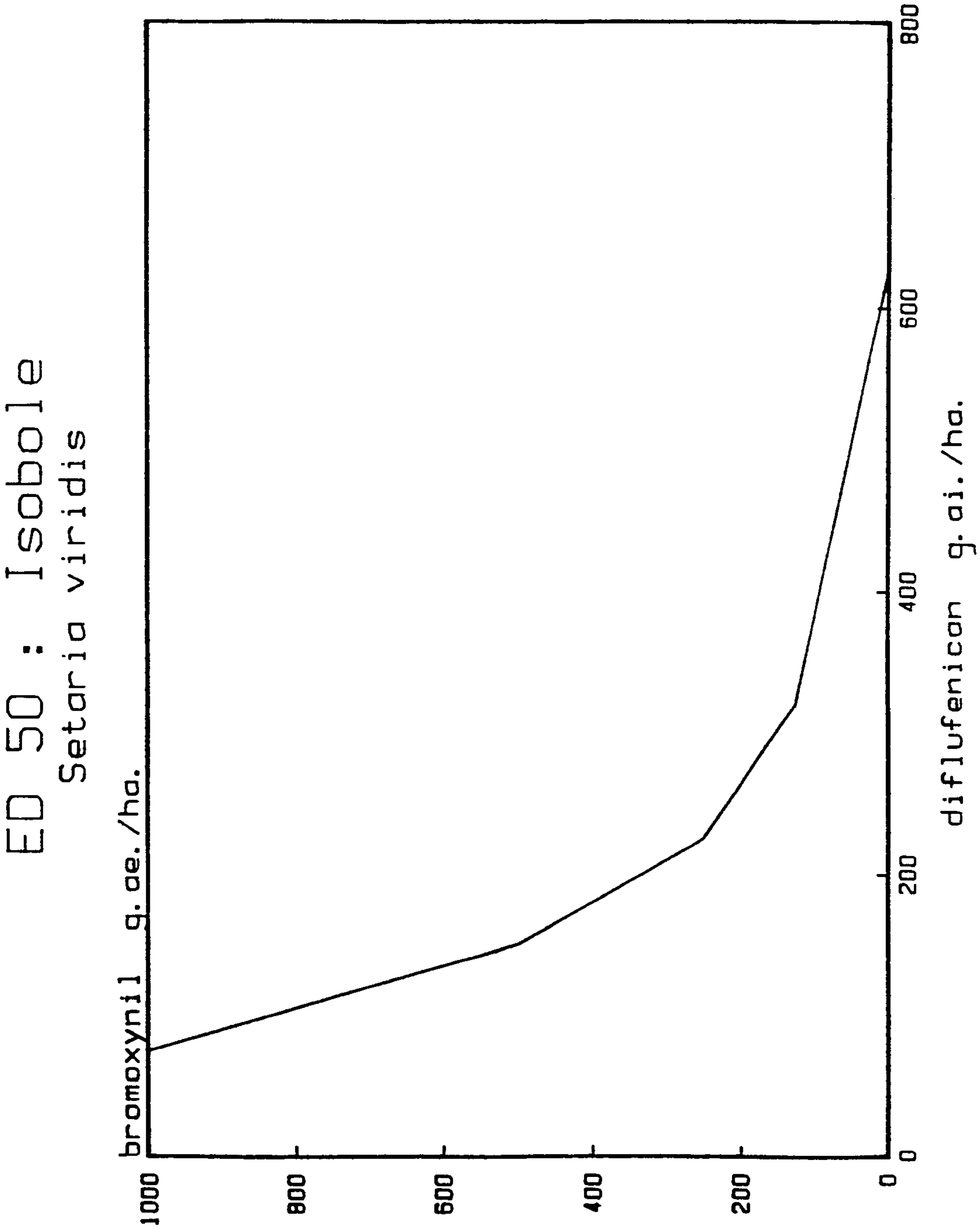
ED 50 : Isobole
Setaria viridis
bromoxynil g.ae./ha.
diflufenican g.ai./ha.
0
200
400
600
800
1000